# EUROPEAN PATENT APPLICATION

(11) **EP 2 651 074 A1**
(43) Date of publication of application: **16.10.2013**
(21) Application number: 11847237.2
(22) Date of filing: 19.09.2011
(51) Int. Cl.: H04L 12/18

(54) **METHOD AND DEVICE FOR BROADCASTING DOMAIN-DIVISION TIME-DIVISION PACKET**

(30) Priority: 09.12.2010 CN 201010580696
(71) Applicant: ZTE Corporation, Shenzhen, Guangdong 518057 (CN)
(72) Inventor: LI, Xiaoli, Shenzhen Guangdong 518057 (CN)
(74) Representative: Pronovem
(86) International application number: PCT/CN2011/079837
(87) International publication number: WO 2012/075846

(57) **Abstract**

The present invention provides a method and a device for broadcasting a message during domain division. The method includes: a switching device setting an identifier for a path in a domain; and after receiving a message from one path, the switching device broadcasting the message by using a path which has a different identifier from the one path. The present invention solves the problem of message blocking caused during domain division in related technologies, thereby achieving an effect of normally broadcasting the message.

## Description

### Technical Field

The present invention relates to the field of communications, and in particular to a method and a device for broadcasting a message during domain division.

### Background

With the advancement of the grouping transformation of a Metropolitan Area Network (MAN), different implementation technologies of carrier-grade Ethernet services are continuously developed and improved, including Virtual Private Local Area Network (LAN) Service (VPLS) technology. The VPLS provides a point-to-multipoint Layer 2 Virtual Private Network (L2VPN) service, which combines the advantages of an Ethernet and a Multi Protocol Label Switching (MPLS) Virtual Private Network (VPN). By the L2VPN service, two stations which are connected via an MAN or a Wide Area Network (WAN) interact with each other as if they communicate in one LAN.

The VPLS provides accessibility via Media Access Control (MAC) address learning. 1) The MAC address learning includes remote MAC address learning correlative to a Pseudo Wire (PW, a virtual connection between two Virtual Switch Instances (VSI)), i.e. learning the remote MAC address via the PW The PW is composed of a pair of one-way Virtual Circuit Label Switch Paths (VC LSP). After an originally unknown MAC address is learned on a VC LSP of the ingress direction, the PW is required to form a mapping relationship between the MAC address and a VC LSP of the egress direction. 2) The MAC address learning includes local MAC address learning of a port which directly connects with the user, i.e. learning the MAC address which is directly accessed via an Attachment Circuit (AC). A source MAC address of a message which is transmitted on a Customer Edge (CE) is required to be learned on the port corresponding to the VSI.

A Provider Edge (PE) implements the MAC address learning in the VPLS. Meanwhile, the MAC address learning of the VPLS needs to satisfy the following restricted conditions: 1) for a message of which a destination MAC address is a non-broadcast address, if the PE has not learned the MAC address, the PE broadcasts the message; 2) if the PE receives a broadcast message sent by a local user, the PE forwards the broadcast message to all the other ports of the same VPLS and all the other PEs of the same VPLS.

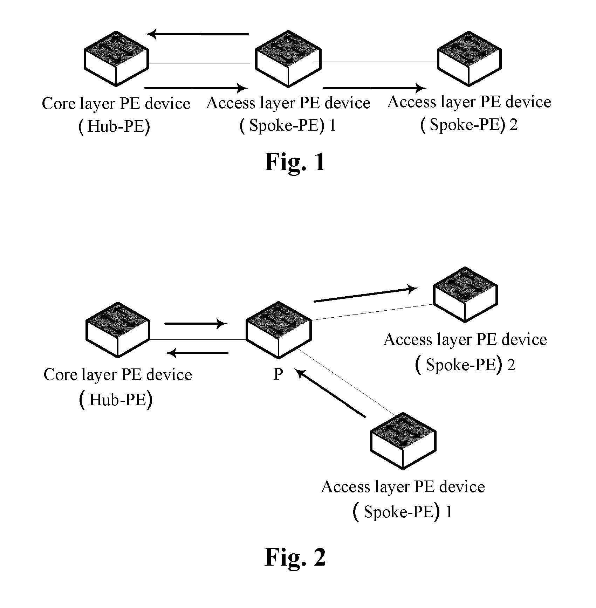

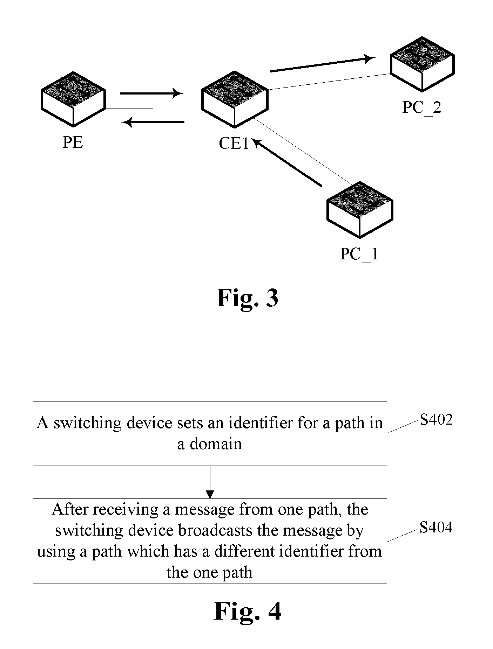

As the "broadcast" operating mode is adopted, information is easy to be collided and blocked during the transmission process when the network scale is relatively large. The restriction of the restricted condition 2) of the MAC address learning to the broadcasting range (namely, the broadcast domain) can effectively reduce the influence of the broadcast storm to the network. However, at the same time, domain division causes certain defects to actual networking applications. For example, as shown in Fig. 1 and Fig. 2, on the PW side, aiming at Hub-Spoke (hub-and-spoke topology) networking, a Spoke-PE1 (an access layer PE device) and a Spoke-PE2 belong to the same VSI, when the Spoke-PE1 does not learn the MAC of the Spoke-PE2, a broadcast message is sent to a Hub-PE (a core layer PE device) via a PW from the Hub-PE to the Spoke-PE1, the Hub-PE broadcasts the traffic to other ports (discarding if not finding said other ports) except this port in the current example after completing copying. In this case, as the PW from the Hub-PE to the Spoke-PE2 has the same port with the PW in the ingress direction of the broadcast message, the traffic is not forwarded from this port any more. Fig. 3 also has the similar networking with the Fig. 1 and Fig. 2. The AC (circuit between the CE and the PE) side also has the similar problem of wrongly discarding the broadcast traffic. As shown in Fig. 3, after the broadcast traffic of the PC_1 reaches the PE, the traffic cannot be broadcast from the same port to the PC_2 via the CE1, wherein the PC_2 and the PC_1 are accessed to different VLANs (the PC_2 and the PE_1 have different VLAN TAG attributes).

At present, the method of solving the message blocking problems caused by the domain division in the VPLS includes changing of external network topology and networking aversion. The disadvantage of the current method is limited application conditions and poor extensibility. In addition, the problem can be solved by introducing more effective and intelligent MAC learning mechanisms, for example, whether to block the traffic is determined based on the consistency comparison between the source AC and the destination AC, and the consistency comparison between the source PW and the destination PW However, the methods have high requirements on hardware and have high management complexity.

### Summary

The present invention provides a solution for broadcasting a message during domain division, which can solve the problem of message blocking generated during the domain division in the related technologies.

According to one aspect, the present invention provides a method for broadcasting a message during domain division, including: a switching device setting an identifier for a path in a domain; after receiving a message from one path, the switching device broadcasting the message by using a path which has a different identifier from the one path.

Preferably, the switching device setting the identifier for the path in the domain includes: the switching device generating Virtual Private Local Area Network Service (VPLS) forwarding entry information corresponding to the path in the domain, and obtaining an identifier corresponding to the VPLS forwarding entry information; the switching device determining that the VPLS forwarding entry information does not exist in a forwarding table; the switching device writing the VPLS forwarding entry information and the identifier corresponding to the VPLS forwarding entry information into the forwarding table.

Preferably, the switching device generating the VPLS forwarding entry information corresponding to the path in the domain, and obtaining the identifier corresponding to the VPLS forwarding entry information includes: a master control processing unit of the switching device generating the VPLS forwarding entry information, and obtaining the identifier corresponding to the VPLS forwarding entry information.

Preferably, the switching device generating the VPLS forwarding entry information corresponding to the path in the domain, and obtaining the identifier corresponding to the VPLS forwarding entry information includes: a master control processing unit of the switching device generating the VPLS forwarding entry information; the master control processing unit sending the VPLS forwarding entry information to a line card of the switching device; the line card of the switching device obtaining the identifier corresponding to the VPLS forwarding entry information.

Preferably, obtaining the identifier corresponding to the VPLS forwarding entry information includes: a Virtual Forwarding Instance ID (VFI ID) management module of the switching device judging whether the VPLS forwarding entry information has a corresponding identifier; if the VPLS forwarding entry information has the corresponding identifier, the VFI ID management module of the switching device sending the corresponding identifier to a master control processing unit of the switching device or a line card of the switching device; if the VPLS forwarding entry information does not have the corresponding identifier, the VFI ID management module allocating a corresponding identifier for the VPLS forwarding entry information, and sending the corresponding identifier to the master control processing unit of the switching device or the line card of the switching device.

Preferably, after receiving the message from the one path, the switching device broadcasting the message by using the path which has the different identifier from the one path includes: after receiving the message, the switching device searching, in the forwarding table, for the path which has the different identifier from the one path; a broadcasting device broadcasting the message by using the path which has the different identifier from the one path.

According to another aspect, the present invention provides a device for broadcasting a message during domain division, including: a setting module, configured to set an identifier for a path in a domain; a receiving module, configured to receive a message from one path; a broadcasting module, configured to broadcast the message by using a path which has a different identifier from the one path.

Preferably, the setting module includes: a generation sub-module, configured to generate Virtual Private Local Area Network Service (VPLS) forwarding entry information corresponding to the path in the domain; an acquisition sub-module, configured to acquire an identifier corresponding to the VPLS forwarding entry information; a determining sub-module, configured to determine that the VPLS forwarding entry information does not exist in a forwarding table; a recording sub-module, configured to write the VPLS forwarding entry information and the identifier corresponding to the VPLS forwarding entry information into the forwarding table.

Preferably, the generation sub-module and the acquisition sub-module are located in a master control processing unit of the switching device.

Preferably, the acquisition sub-module is located in a master control processing unit of the switching device and the acquisition sub-module is located in a line card of the switching device, the acquisition sub-module is configured to generate the VPLS forwarding entry information; the master control processing unit is configured to send the VPLS forwarding entry information to the line card; the line card is configured to acquire the identifier corresponding to the VPLS forwarding entry information.

The present invention sets an identifier for a path in a domain, and when receiving a message, broadcasts the message by using a path different from the path from which the message is received, thus solving the problem of message blocking caused during domain division in the related technologies, and further achieving the effect of normally broadcasting the message.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram of a PW networking example according to the related technologies;
Fig. 2 is a schematic diagram of another PW networking example according to the related technologies;
Fig. 3 is a schematic diagram of an AC networking example according to the related technologies;
Fig. 4 is a flowchart of a method for broadcasting a message during domain division according to an embodiment of the present invention;
Fig. 5 is a flowchart of a method for allocating and synchronizing a VFI ID according to an embodiment of the present invention;
Fig. 6 is a flowchart of processing the broadcast message at the AC side according to an embodiment of the present invention;
Fig. 7 is a flowchart of processing the broadcast message at the PW side according to an embodiment of the present invention;
Fig. 8 is a structure diagram of a device for broadcasting a message during domain division according to an embodiment of the present invention;
Fig. 9 is a structure diagram of the setting module according to an embodiment of the present invention.

### Detailed Description of the Embodiments

The present invention is described below in details with reference to the drawings and embodiments. It should be noted that, the embodiments in the application and the characteristics of the embodiments can be mutually combined in the case of no conflict.

### Embodiment 1

The embodiment of the present invention provides a method for broadcasting a message during domain division. Fig. 4 is a flowchart of a method for broadcasting a message during domain division according to an embodiment of the present invention. As shown in Fig. 4, the method includes Steps S402 to S404.

Step S402, a switching device sets an identifier for a path in a domain, wherein the identifier may be the identifier of an existing PW and the like, and also may be a VFI ID which is newly set.

Step S404, after receiving a message from one path, the switching device broadcasts the message by using a path which has a different identifier from this path.

In this embodiment, the identifier is set for the path in the domain, and when receiving the message, the switching device broadcasts the message by using the path different from the path from which the message is received, so that the broadcast message of which an ingress attribute and an egress attribute are the same can be broadcast. In this embodiment, the switching device may be a switch.

In a preferred implementation mode of the embodiment of the present invention, the step that the switching device sets the identifier for the path in the domain may include the steps that: the switching device generates VPLS forwarding entry information corresponding to the path in the domain, and obtains the identifier corresponding to the VPLS forwarding entry information; and then, the switching device judges whether the VPLS forwarding entry information exists in a forwarding table, if the VPLS forwarding entry information does not exist in the forwarding table, the switching device writes the VPLS forwarding entry information and the identifier corresponding to the VPLS forwarding entry information into the forwarding table.

In another preferred implementation mode of the embodiment of the present invention, the step that the switching device generates the VPLS forwarding entry information, and obtains the identifier corresponding to the VPLS forwarding entry information can be implemented via the following mode:
a master control processing unit of the switching device generates the VPLS forwarding entry information, and obtains the identifier corresponding to the VPLS forwarding entry information; or
the master control processing unit of the switching device generates the VPLS forwarding entry information; and then, the master control processing unit sends the VPLS forwarding entry information to a line card of the switching device; and then the line card obtains the identifier corresponding to the VPLS forwarding entry information.

In another preferred implementation mode of the embodiment of the present invention, the step of obtaining the VPLS forwarding entry information may include: a VFI ID management module of the switching device judges whether the VPLS forwarding entry information has the corresponding identifier; if yes, the VFI ID management module sends the corresponding identifier to a master control processing unit or a line card of the switching device; otherwise, the VFI ID management module allocates the corresponding identifier for the VPLS forwarding entry information, and sends the corresponding identifier to the master control processing unit or the line card of the switching device.

Preferably, the Step S404 may include: after receiving the message, the switching device searches, in the forwarding table, a path which has a different identifier from the one path; a broadcasting device broadcasts the message by using the path with the different identifier.

### Embodiment 2

This embodiment provides a method of determining and managing message blocking, which is used for preventing that a normal broadcast traffic is discarded by the current device in the case that the broadcast traffic has the same ingress attribute and egress attribute, thus blocking the forwarding of the normal broadcast message.

The embodiment sets instance sequence identifiers at the AC side and the PW side for the VPLS service instance, for identifying different accesses of the AC side and different PWs of the PW side, and synchronously writes the same into a hardware forwarding table. When forwarding a message, the types of a data source and a data destination (AC or PW), as well as the instance sequence identifier corresponding to the ingress of the data source and the sequence identifier of the egress direction are distinguished, the message is discarded when they are the same; otherwise, the traffic is forwarded normally.

In the above, the instance sequence identifiers are allocated based on packaging information of message forwarding and are in one-to-one correspondence with the packaging information of the message egress. Different packaging information of the message egress binds with different instance sequence identifiers.

The embodiment determines whether to discard or forward the traffic by comparing the instance sequence identifier of the ingress and the sequence identifier in the egress direction, thereby solving the problem that different accesses of the same port in the VPLS cannot exchange the broadcast traffic with each other. In addition, by setting the instance identifier, the original broadcast mechanisms do not need to be changed, and meanwhile, the performance requirements of the complex networking of the Ethernet switch (including distributed type and centralized type) to the hardware can be reduced. The extensibility of the VPLS network structure is improved without increasing the hardware cost.

The switch in the embodiment includes a master control processing unit and a number of line card boards. In order to facilitate description, the VPLS instance sequence identifier is abbreviated as Virtual Switch Instance Identifier (VFI ID) for short. The implementation process of this embodiment is described below by taking the implementation method of a distributed switch as an example. The implementation process includes the following steps.

Step 1, new VPLS forwarding entry information is generated on a master control, and a VFI ID allocating interface provided by a VFI ID management module is invoked.

Step 2, the VFI ID management module judges whether the VFI ID is required to be allocated, the VFI ID is allocated if no VFI ID corresponding to the forwarding entry exists, otherwise, no processing is performed. The VFI ID module establishes correlation between the forwarding entry and the VFI ID, and guarantees that the different forwarding entries are corresponding to different VFI IDs.

Step 3, the master control issues forwarding entry synchronization information and the VFI ID to a line card driver.

Step 4, the line card driver accepts the forwarding entry information and the VFI ID, and then judges whether it is required to write the driver (writing the information into the hardware forwarding table), if yes, the process of writing the driver is performed, otherwise, Step 5 is implemented.

Step 5, the synchronization of the forwarding information and the VFI ID is completed, and exit the synchronization process of the forwarding entry.

In addition, when deleting the forwarding entry information, the master control invokes a release interface to recycle the VFI ID, namely, the recycle of the VFI ID is consistent with the deletion of the forwarding entry.

In the above, the forwarding entry information generated on the master control in Step 1 mainly includes: forwarding paths correlative to local instances and remote PW instances which are generated by configuring the VPLS instance, protocol (such as Label Distribution Protocol (LDP)) and the like on the master control.

In the above, the VFI ID module in Step 2 needs to maintain a VFI ID table, search in the VFI ID table according to keywords of the forwarding entry transmitted by the platform, and judge whether a corresponding VFI ID value has been allocated for the entry, if yes, the found VFI ID is returned to the platform. Additionally, it also can be processed below: the platform does not send the VFI ID to the line card; the line card searches in the VFI ID table according to the keywords after receiving the forwarding entry information, so as to obtain the VFI ID.

In the above, the VFI ID module of the line card in Step 4 may choose, according to requirements, whether to maintain the VFI ID table.

In the above, the line card driver in Step 5 judges whether to write the driver based on a new forwarding entry on the master control and/or update of the forwarding entry information. The process of writing the driver is required when the forwarding entry synchronization is triggered by the new forwarding entry on the master control and/or the update of the forwarding entry information, while the process of writing the driver is not required in other cases.

In the above, the line card and the master control of a centralized switch are integrated, and the above functions are completed by the same control unit.

On the basis of the existing mechanisms of processing the broadcast message via domain division, the embodiment of the present invention adds the method of implementing decision and management for the traffic blocking based on the global service instance sequence identifier, which can prevent the normal broadcast traffic with the characteristic of having the same ingress attribute and egress attribute from being discarded. Compared with the related art, the embodiment decides to discard or forward the traffic of the broadcast message by the comparison of synchronized instance sequence numbers and the adoption of more complete message traffic blocking decision mechanisms. On the basis of not changing the original domain division mechanism for preventing the broadcast storm, this embodiment solves the problem of abnormal broadcast message blocking caused by domain division, reduces the requirements of the hardware, and improves the network extensibility of the VPLS.

### Embodiment 3

The implementation process of the allocating and synchronization processing method of the VFI ID in the embodiment of the present invention is described below with reference to the drawings.

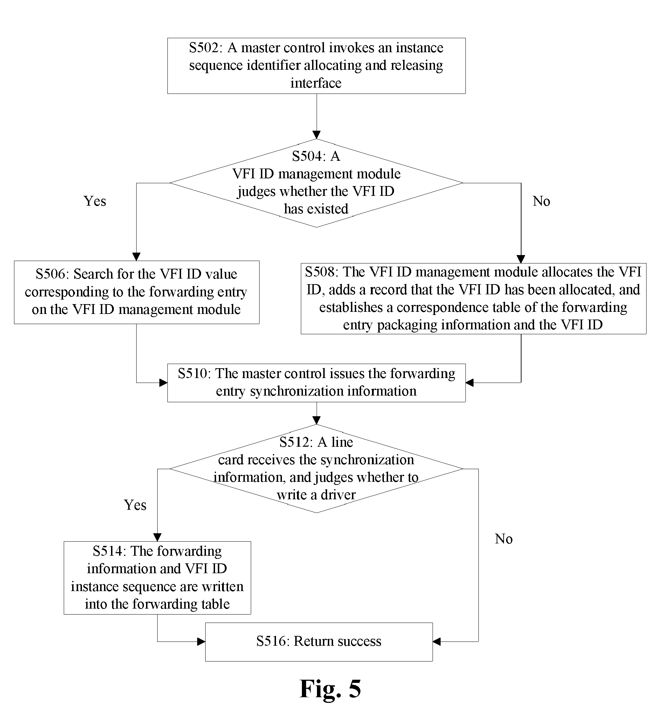

Fig. 5 is a flowchart of a method for allocating and synchronizing a VFI ID according to an embodiment of the present invention. As shown in Fig. 5, the process includes Steps S502 to S516.

Step S502, new forwarding entries are generated on the master control due to configuration or protocol. The master control invokes a VFI ID allocating and releasing interface provided by a master control VFI ID module.

Step S504, the VFI ID module judges whether the VFI ID has existed; if yes, Step S506 is implemented, otherwise, Step S508 is implemented.

Step S506, the VFI ID module searches in the VFI ID table according to the forwarding entry information (the egress package attribute information corresponding to the forwarding path where the AC and the PW are located), so as to obtain the allocated VFI ID of the forwarding entry.

Step S508, the VFI ID module allocates the VFI ID for the forwarding entry, adds a record that the VFI ID has been allocated, and establishes a correspondence table between the forwarding entry packaging information and the VFI ID.

Step S510, the master control issues the forwarding entry synchronization information and the VFI ID to the line card.

Steps S512 to S514, after receiving the information issued by the master control, the line card judges whether the forwarding entry information successfully writes the driver, if yes, implementing Step S516, not writing the driver, and returning a driver writing success; otherwise, if a new entry is added, writing the forwarding information and the VFI ID information to the VPLS forwarding table, if old entry information is changed, updating the VPLS forwarding table.

Step S516, return success.

It should be noted that, for a switch which supports a main/backup switching function (not only including a master control board, but also including a backup board), the correspondence table between the forwarding entry packaging information and the VFI ID also needs to be maintained on the backup board. The instance sequence number is synchronized to select the synchronization mechanism which synchronizes the forwarding entry information to the backup board by use of the VPLS service master control or other synchronization mechanisms.

In addition, for the recycle processing of instance sequence identifier resources, the instance sequence identifier resources are recycled when the instance becomes invalid, namely, when the protocol or configuration commands to issue the deletion of the forwarding entry.

In addition, in the case of small amount of services and a fixed forwarding entry identifier (for example, the PW services with different PW identifier exist, for example, totally supporting 16K, and the capacity is fixed), a fixed allocating mode (for example, selecting the number 16K as the instance identifier, and establishing the fixed mapping relationship with the PW ID) can be adopted, and the instance sequence identifier resources are not recycled.

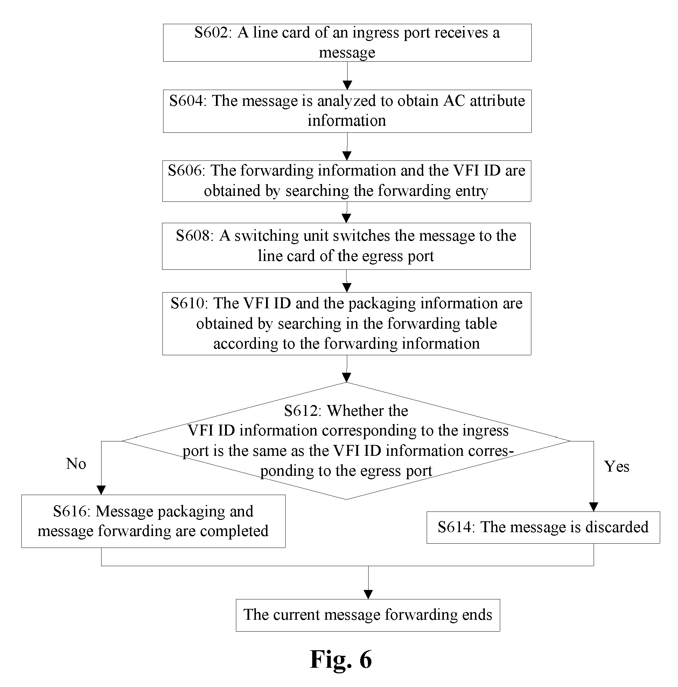

Fig. 6 is a flowchart of processing the broadcast message at the AC side according to an embodiment of the present invention. As shown in Fig. 6, this flow includes Steps S602-S616.

Step S602, a message enters an ingress line card via an ingress port.

Step S604, an ingress chip analyzes the message, and obtains AC attribute information of the ingress port (including VLAN TAG attribute information).

Step S606, AC forwarding information of an egress port and a VFI ID corresponding to the AC of the ingress port are obtained by searching in a forwarding table. The found information is sent to a switch processing unit (whether the switch processing unit is arranged on a master control or a line card can be determined according to different implementation mechanisms of the switch).

Step S608, the switch processing unit switches a message, which carries the forwarding attribute information of the egress port and the VFI ID information corresponding to the AC of the ingress port, to a line card where the chip of the egress port is located according to the forwarding attribute information of the AC of the egress port.

Step S610, the chip of the egress port searches in the forwarding table according to the forwarding information of the egress port to obtain the VFI ID and packaging information corresponding to the AC of the egress port.

Step S612, a message blocking decision and management module compares whether the VFI ID information corresponding to the AC of the ingress port is the same as the VFI ID corresponding to the egress port, if yes, Step S614 is implemented; otherwise, Step S616 is implemented.

Step S614, the traffic is discarded.

Step S616, message packaging is completed according to the packaging information, and the message forwarding is finally completed.

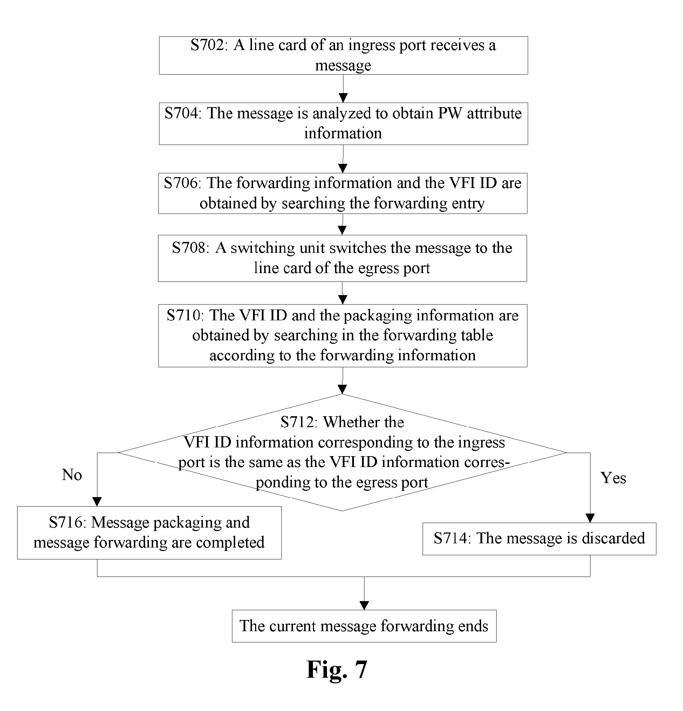

Fig. 7 is a flowchart of processing the broadcast message at the PW side according to an embodiment of the present invention. As shown in Fig. 7, the flow includes Steps S702 to S716.

Step S702, a message enters an ingress line card via an ingress port.

Step S704, an ingress chip analyzes the message, and obtains PW attribute information of the ingress port.

Step S706, PW forwarding attribute information of an egress port and a VFI ID corresponding to the PW of the ingress port are obtained by searching in a forwarding table. The obtained information is sent to a switch processing unit (whether the switch processing unit is arranged on a master control or a line card can be determined according to different implementation mechanisms of the switch).

Step S708, the switch processing unit switches a message, which carries the forwarding attribute information of the egress port and the VFI ID information corresponding to the PW of the ingress port, to a line card where the chip of the egress port is located according to the forwarding attribute information of the PW of the egress port.

Step S710, the chip of the egress port searches in the forwarding table according to the forwarding attribute information of the egress port to obtain the VFI ID and the packaging information corresponding to the PW of the egress port.

Step S712, a message blocking decision and management module compares whether the VFI ID information corresponding to the PW of the ingress port is the same as the VFI ID information of the egress port, if yes, Step S714 is implemented, otherwise, Step S716 is implemented.

Step S714, the traffic is discarded.

Step S716, message packaging is completed according to the packaging information, and the message forwarding at the PW side is finally completed.

The message blocking decision and management method of this embodiment can be applied in L2VPN services and distributed and centralized switches which have message blocking problems caused by domain division. The message broadcast of this embodiment can be implemented by the following method: correspondence between message forwarding information and a service instance sequence identifier is maintained, and whether to forward or discard a message is determined by the original message broadcast decision mechanisms and the comparison between the instance sequence identifier of the ingress port and the instance sequence identifier of the egress port.

The corresponding transformations also can be implemented based on this embodiment. For example, a globally unique instance identifier may be selected aiming at multiple line cards, and a locally unique identifier also may be selected aiming at a single line card. The identifier may be self-defined, or the attribute identifier (such as PW ID, PW ingress TAG and the like) correlative to the service attribute also can be taken as the instance identifier. Further, the traffic blocking decision can be completed on the ingress chip, and also can be on the egress chip.

### Embodiment 4

This embodiment provides a device for broadcasting a message during domain division. The device is used for implementing the methods in the above embodiments. The device may be a switching device such as a switch.

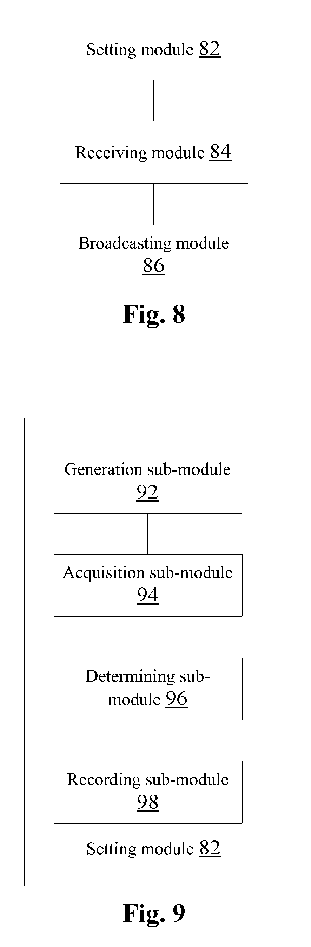

Fig. 8 is a structure diagram of a device for broadcasting a message during domain division according to an embodiment of the present invention. As shown in Fig. 8, the device includes: a setting module 82, configured to set an identifier for a path in a domain; a receiving module 84, coupled to the setting module 82, and configured to receive a message from one path; a broadcasting module 86, coupled to the receiving module 84, and configured to broadcast the message by using a path which has a different identifier from the one path.

Fig. 9 is a structure diagram of the setting module according to an embodiment of the present invention. As shown in Fig. 9, the setting module 82 includes: a generation sub-module 92, configured to generate VPLS forwarding entry information corresponding to the path in the domain; an acquisition sub-module 94, coupled to the generation sub-module 92, and configured to obtain an identifier corresponding to the VPLS forwarding entry information; a determining sub-module 96, coupled to the acquisition sub-module 94, and configured to determine that the VPLS forwarding entry information does not exist in a forwarding table; a recording sub-module 98, coupled to the determining sub-module 96, and configured to write the VPLS forwarding entry information and the identifier into the forwarding table.

In another preferred instance of the embodiment of the present invention, the generation sub-module 92 and the acquisition sub-module 94 are located in a master control processing unit of the switching device.

In another preferred instance of the embodiment of the present invention, the acquisition sub-module 94 is located in a master control processing unit of the switching device, and the acquisition sub-module 94 is located in a line card of the switching device. The acquisition sub-module 94 is configured to generate the VPLS forwarding entry information; the master control processing unit is configured to send the VPLS forwarding entry information to the line card; the line card is configured to obtain the identifier corresponding to the VPLS forwarding entry information.

In conclusion, the embodiments of the present invention can implement the message blocking decision mechanisms based on the service instance sequence, remove the conflicts between the complex networking and the domain division solution for preventing broadcast storms, reduce the complexity of the message blocking decision mechanism, reduce the hardware cost. Meanwhile, the embodiments of the present invention can improve the chip forwarding flexibility by uniformly processing the single-board forwarding and the cross-board forwarding.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for broadcasting a message during domain division, **characterized by** comprising:
a switching device setting an identifier for a path in a domain;
after receiving a message from one path, the switching device broadcasting the message by using a path which has a different identifier from the one path.

2. The method according to claim 1, **characterized in that** the switching device setting the identifier for the path in the domain comprises:
the switching device generating Virtual Private Local Area Network Service (VPLS) forwarding entry information corresponding to the path in the domain, and obtaining an identifier corresponding to the VPLS forwarding entry information;
the switching device determining that the VPLS forwarding entry information does not exist in a forwarding table;
the switching device writing the VPLS forwarding entry information and the identifier corresponding to the VPLS forwarding entry information into the forwarding table.

3. The method according to claim 2, **characterized in that** the switching device generating the VPLS forwarding entry information corresponding to the path in the domain, and obtaining the identifier corresponding to the VPLS forwarding entry information comprises:
a master control processing unit of the switching device generating the VPLS forwarding entry information, and obtaining the identifier corresponding to the VPLS forwarding entry information.

4. The method according to claim 2, **characterized in that** the switching device generating the VPLS forwarding entry information corresponding to the path in the domain, and obtaining the identifier corresponding to the VPLS forwarding entry information comprises:
a master control processing unit of the switching device generating the VPLS forwarding entry information;
the master control processing unit sending the VPLS forwarding entry information to a line card of the switching device;
the line card of the switching device obtaining the identifier corresponding to the VPLS forwarding entry information.

5. The method according to any one of claims 2 to 4, **characterized in that** obtaining the identifier corresponding to the VPLS forwarding entry information comprises:
a Virtual Forwarding Instance ID (VFI ID) management module of the switching device judging whether the VPLS forwarding entry information has a corresponding identifier;
if the VPLS forwarding entry information has the corresponding identifier, the VFI ID management module of the switching device sending the corresponding identifier to a master control processing unit of the switching device or a line card of the switching device;
if the VPLS forwarding entry information does not have the corresponding identifier, the VFI ID management module allocating a corresponding identifier for the VPLS forwarding entry information, and sending the corresponding identifier to the master control processing unit of the switching device or the line card of the switching device.

6. The method according to any one of claims 2 to 4, **characterized in that** after receiving the message from the one path, the switching device broadcasting the message by using the path which has the different identifier from the one path comprises:
after receiving the message, the switching device searching, in the forwarding table, for the path which has the different identifier from the one path;
a broadcasting device broadcasting the message by using the path which has the different identifier from the one path.

7. A device for broadcasting a message during domain division, **characterized by** comprising:
a setting module, configured to set an identifier for a path in a domain;
a receiving module, configured to receive a message from one path;
a broadcasting module, configured to broadcast the message by using a path which has a different identifier from the one path.

8. The device according to claim 7, **characterized in that** the setting module comprises:
a generation sub-module, configured to generate Virtual Private Local Area Network Service (VPLS) forwarding entry information corresponding to the path in the domain;
an acquisition sub-module, configured to acquire an identifier corresponding to the VPLS forwarding entry information;
a determining sub-module, configured to determine that the VPLS forwarding entry information does not exist in a forwarding table;
a recording sub-module, configured to write the VPLS forwarding entry information and the identifier corresponding to the VPLS forwarding entry information into the forwarding table.

9. The device according to claim 8, **characterized in that** the generation sub-module and the acquisition sub-module are located in a master control processing unit of the switching device.

10. The system according to claim 8, **characterized in that** the acquisition sub-module is located in a master control processing unit of the switching device and the acquisition sub-module is located in a line card of the switching device,
the acquisition sub-module is configured to generate the VPLS forwarding entry information;
the master control processing unit is configured to send the VPLS forwarding entry information to the line card;
the line card is configured to acquire the identifier corresponding to the VPLS forwarding entry information.
